(19) Europäisches Patentamt
European Patent Office
Office européen des brevets

(11) Veröffentlichungsnummer: **0 548 726 B1**

(12) **EUROPÄISCHE PATENTSCHRIFT**

(45) Veröffentlichungstag der Patentschrift: **20.09.95**

(51) Int. Cl.$^6$: **C08F 220/04**, A01N 47/18

(21) Anmeldenummer: **92121241.1**

(22) Anmeldetag: **14.12.92**

# (54) Biozide Polymerisate und Polymerisatdispersionen, Verfahren zu ihrer Herstellung und ihre Verwendung.

(30) Priorität: **21.12.91 DE 4142731**

(43) Veröffentlichungstag der Anmeldung:
**30.06.93 Patentblatt 93/26**

(45) Bekanntmachung des Hinweises auf die Patenterteilung:
**20.09.95 Patentblatt 95/38**

(84) Benannte Vertragsstaaten:
**AT BE DE ES FR GB GR IE IT NL SE**

(56) Entgegenhaltungen:
**FR-A- 2 583 753**

**'The Pesticide Manuel' 1991 , THE BRITISH CROP PROTECTION COUNCIL , 9TH EDITION, FARNHAM, SURREY, UK**

**CHEMICAL ABSTRACTS, vol. 108, no. 13, 28. M rz 1988, Columbus, Ohio, US;**

**abstract no. 108151n, SWIETOSLAWSKI ET AL. 'Antimicrobial Agent' Seite 235 ;Spalte 2 ;**

(73) Patentinhaber: **HOECHST AKTIENGESELL-SCHAFT**

**D-65926 Frankfurt am Main (DE)**

(72) Erfinder: **Huth, Hans-Ullrich, Dr.**
**Finkenweg 6**
**W-6073 Egelsbach (DE)**
Erfinder: **Lindner, Wolfgang, Dr.**
**Lindenstrasse 8**
**W-3016 Seelze (DE)**

**EP 0 548 726 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft biozide Polymerisate und Copolymerisate, vorzugsweise wäßrige biozide Kunststoffdispersionen, Verfahren zu ihrer Herstellung aus monomeren BCM-Salzen von ethylenisch ungesättigten und radikalisch polymerisationsfähigen und copolymerisationsfähigen Säuren durch radikalische Polymerisation oder Copolymerisation und ihre Verwendung als fungizide und algizide Anstrich- und Ausrüstungsmittel, als Lasur für den Holzschutz, für Dispersionsanstriche mit Bläueschutz auf Holz, für Kunstharzputze, für Sichtbetonanstrichmittel und für Textilausrüstungsmittel.

Viele Holzarten, darunter zahlreiche einheimische, haben nur eine geringe natürliche Dauerhaftigkeit. Vor allem bei Feuchtigkeitseinwirkung, z.B. im Einsatz außerhalb geschlossener Räume bzw. innerhalb feuchter und wenig belüfteter Räume, ist die Gefahr der Besiedlung und Zerstörung von naturbelassenem Holz durch Pilze und Mikroorganismen groß. Es hat daher nicht an Versuchen gefehlt, die Anfälligkeit von Nutzholz zu verringern. So wurden und werden noch häufig als Holzschutzmittel Lösungen bzw. Mischungen von polymeren Bindemitteln mit fungiziden Verbindungen, häufig Phenolabkömmlingen wie z.B. PCP, Trichlorphenole, ortho-Phenylphenol (z.B. Preventol), Polyhalogenkohlenwasserstoffen (z.B. das Insektizid HCH oder das Fungizid 2,4,5,6-Tetrachlor-m-phthalodinitril (Nopcocide N40)) oder Zinnverbindungen (Tributylzinnoxid) bzw. deren Umsetzungsprodukte mit Carbonsäuren, wie z.B. Ölsäure, Naphthensäure, Benzoesäure, in Kombination mit organischen Lösungsmitteln eingesetzt. Nachteile dieser Systeme sind u.a. erhebliche toxikologische Bedenken hinsichtlich der Wirkstoffe, die Brennbarkeit vieler dieser Mittel sowie ihr starker Eigengeruch, der einen Einsatz z.B. in Wohnräumen ausschließt oder einschränkt, ferner der hohe Preis der Lösungsmittel und die nachteiligen Auswirkungen bei ihrer Freisetzung in die Luft auf die menschliche Gesundheit und die Umwelt. Dazu kommt noch, daß die Wirksamkeit der bisher bekannten Holzschutzmittel oft rasch nachläßt, da die bioziden Wirkstoffe trotz ihrer häufigen Wasserunlöslichkeit z.B. bei der Freibewitterung verhältnismäßig schnell ausgewaschen werden oder sich über die Gasphase verlagern und dann infolge ihrer meist unzureichenden biologischen Abbaubarkeit die Umwelt kontaminieren können.

Die Verwendung von anionischen Kunststoffdispersionen als Bindemittel für Farben und Putze sowie zum Lasieren von Holz ist bereits bekannt. Produkte dieser Art sind umweltschonend und erfüllen die Forderung einer Holzbeschichtung auch in ästhetischer Hinsicht sehr gut. Von Nachteil ist, daß sie bei alleiniger Anwendung wegen fehlender biozider Wirksamkeit das Holz nicht genügend vor Fäulnis und Befall durch Pilze schützen können. Ein wirksamer Zusatz der oben genannten freien Wirkstoffe, wie Phenolverbindungen, Polyhalogenkohlenwasserstoffe, Zinnverbindungen mit ihren schon erwähnten Nachteilen ist jedoch nur unter Schwierigkeiten möglich. Sie können z.B. für Innenanwendungen, insbesondere aus toxikologischen Gründen, nicht empfohlen werden. Sie gewähren bei der Außenanwendung zudem auch trotz ihrer Wasserunlöslichkeit bei Auswaschungsbeanspruchung nur kurzzeitigen Schutz.

Es hat daher nicht an Versuchen gefehlt, die bisherigen Wirkstoffe durch neue geeignete und weniger säugetiertoxische zu ersetzen. Die bisher bekannt gewordenen Wirkstoffe haben aber meist den Nachteil, daß sie nur gegen einen bestimmten Pilz wirken und zum Teil in Form von organischen Lösungen mit entsprechend unerwünschten Folgen oder als Feststoffe den Kunststoffdispersionen zugefügt werden müssen, was zusätzliche Maßnahmen der Einmischung erfordert und bei polaren Wirkstoffverbindungen häufig ein zu starkes Auswaschen aus daraus hergestellten Anstrichen zur Folge hatte.

Insbesondere bei der bioziden Ausrüstung von wäßrigen oder wasserverdünnbaren Bindemitteln wie Kunststoffdispersionen oder wasserlöslichen Harzen, wie sie heutzutage verstärkt auf allen Gebieten der Beschichtungen eingesetzt werden, kommen weitere Probleme hinzu. So ist ein Teil der neuen Wirkstoffe in wäßriger Umgebung nicht stabil und wird bei der Lagerung der Bindemittel unter Verlust der Wirksamkeit hydrolisiert (Beispiel: PREVENTOL A 4 = N,N,Dimethyl-N'-phenyl-N'-(fluordichlormethylthio)-sulfamid, PREVENTOL A 5 = N,N-Dimethyl-N'-phenyl-N'-(fluordichlormethylthio)-sulfamid).

Ein anderer Teil der meist organischen Verbindungen ist in Wasser schwer löslich und daher nur schwer oder über polare Hilfslösungsmittel bzw. Löslichkeitsvermittler einbringbar.

Während es für den Schutz des Holzes vor holzzerstörenden Pilzen (z. B. aus der Gruppe der Basidiomyceten, wie z. B. Poria monticola, Gleophyllum trabeum, Lenzites trabea, Lentinus lepideus, Coniophora puteana, Trametes versicolor) durch Tauchen in wirkstoffhaltige Lösungen neue umweltfreundliche Applikationsverfahren und auch neue Wirkstoffe (z. B. Xyligen B (Triazolderivat)) gibt, ist der Befall von Bläuepilzen im Außenbereich von Zäunen und Holzfenstern immer noch ein nicht befriedigend zu lösendes Problem.

Es ist bekannt, daß BCM (Benzimidazolylcarbaminsäuremethylester) eine fungizid sehr wirksame Verbindung sowohl gegen Bläuepilze (z. B. Aureobasidium pullulans und Sclerophoma pityophila), als auch gegen Schimmel-(wie Aspergillus niger) und Moderpilze (z. B. Chaetomium globosum) darstellt, d. h. daß

sie vorteilhafterweise ein sehr breites Wirkungsspektrum besitzt; siehe z. B. auch "The Pesticide Manuel", The British Crop Protection Council, 9th Edition (1991), Seiten 123-124.

Nachteilig ist die außerordentlich niedrige Löslichkeit in allen üblichen organischen Lösungsmitteln sowie insbesondere in Wasser. Die Umsetzung mit reaktiven organischen Verbindungen zu Derivaten mit besserer Löslichkeit oder die covalente Verknüpfung an das Bindemittel über funktionelle Gruppen bei der Polykondensation ist zwar möglich, doch führte das bisher zu einem Abfall in der bioziden Wirkung bis zum vollständigen Verlust des Schutzes. Die bisher einzige Möglichkeit zur fungiziden Ausrüstung eines Bindemittels mit BCM bestand darin, der Bindemittelzubereitung BCM als Wirkstoff in Pulverform zuzusetzen und gut einzuarbeiten. Transparente Dick- oder Dünnschichtlasuren sind aber auf diesem Weg nicht erhältlich, da der Wirkstoff in der erforderlichen Konzentration die Beschichtung trüb erscheinen läßt, was bei der Außenanwendung auf Fensterrahmen und Zäunen nicht erwünscht ist. Besonders auf dem Gebiet der wäßrigen Bindemittel, wie wasserlösliche Harze oder Kunststoffdispersionen, wo sich ein sehr gutes biozides Eigenschaftsbild mit modernem Umwelt- und Arbeitsschutz ergänzen können, wäre es notwendig, einen idealen und universellen bioziden Wirkstoff, der ohne Zeitbegrenzung in den Bindemittelzubereitungen und den daraus hergestellten Anstrichen, Beschichtungen und Imprägnierungen biozid aktiv bleibt, einsetzen zu können.

Der Erfindung lag somit die Aufgabe zugrunde, ein umweltfreundliches, biozides Bindemittel, vorzugsweise in Form einer wäßrigen Kunststoffdispersion, verfügbar zu machen, das zur Herstellung von Lacken oder Grundierungen mit Bläueschutz für Holz geeignet ist, dessen biozider Wirkstoff möglichst homogen verteilt ist und eine möglichst lange biozide Wirkungsdauer bei breitem Wirkungsspektrum besitzt, der biozide Wirkstoff eine geringe Auswaschbarkeit aufweist und gegebenenfalls auch noch gegen den Befall von Algen schützt, was häufig z. B. für Fassaden und für Sichtbeton wichtig sein kann.

Es wurde nun überraschenderweise gefunden, daß man die vorgenannten Schwierigkeiten überwinden und die gestellte Aufgabe lösen kann, wenn man Dispersionen von Polymerisaten verwendet, deren Makromoleküle Monomereinheiten aus Benzimidazolylcarbaminsäuremethylestersalzen (BCM-Salzen) von ethylenisch ungesättigten Carbonsäuren oder ethylenisch ungesättigten Sulfonsäuren oder ethylenisch ungesättigten Phosphonsäuren, vorzugsweise von ethylenisch ungesättigten Carbonsäuren, enthalten.

Gegenstand der Erfindung sind daher biozide Polymerisate oder Copolymerisate auf der Basis von radikalisch polymerisierten oder copolymerisierten ethylenisch ungesättigten Monomeren, dadurch gekennzeichnet, daß die Polymerisate bzw. Copolymerisate Monomereinheiten aus BCM-Salzen der Formel I,

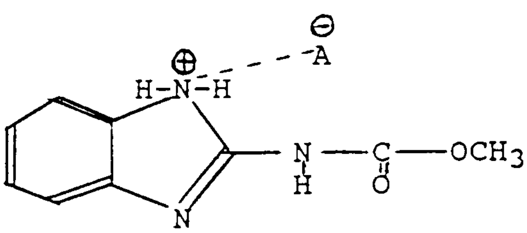

(I)

worin $A^{\ominus}$ einen anionischen ethylenisch ungesättigten Carbonsäure- oder Sulfonsäure- oder Phosphonsäurerest bedeutet, enthalten und diese Monomereinheiten über die ethylenische Doppelbindung des Restes $A^{\ominus}$ in die bioziden Makromoleküle einpolymerisiert sind, oder Lösungen oder wäßrige Dispersionen dieser Polymerisate bzw. Copolymerisate, vorzugsweise wäßrige Dispersionen.

Der Gehalt an Monomereinheiten aus BCM-Salzen der Formel I in den bioziden Polymerisaten bzw. Copolymerisaten ist über einen weiten Bereich variabel und beträgt vorzugsweise 0,001 bis 5 Gew.-%, insbesondere 0,02 bis 1 Gew.-%, bezogen auf das biozide Polymerisat oder Copolymerisat. Es können auch Monomereinheiten aus verschiedenen BCM-Salzen der Formel I in den bioziden Makromolekülen enthalten sein, vorzugsweise solche mit gleichartigen Säureresten im Rest $A^{\ominus}$. Auch Homopolymerisate oder Copolymerisate aus BCM-Salzen der Formel I sind möglich und können in manchen Fällen vorteilhaft sein.

Erfindungsgemäß enthalten die bioziden Polymerisate bzw. Copolymerisate vorzugsweise solche Monomereinheiten aus BCM-Salzen der Formel I, bei denen in Formel I der anionische Rest $A^{\ominus}$ einen Acrylat-, Methacrylat-, Fumarat-, Maleinat-, Crotonat-, Itakonat-, Styrolsulfonat-, Acrylamidomethylpropansulfonat-, Acrylamidoglykolsäuremethyläther-, Vinylsulfonat-, Vinylphosphonat- oder Acrylamidomethylphosphonat-Rest bedeutet. Besonders bevorzugte anionische Reste $A^{\ominus}$ sind Acrylat-, Methacrylat-, Vinylsulfonat-, Acrylamidomethylpropansulfonat-Reste.

Weiterer Gegenstand der Erfindung sind auch die bioziden monomeren BCM-Salze der Formel I, wobei der Rest $A^{\ominus}$ in Formel I die vorstehend angegebenen Bedeutungen hat.

Erfindungsgemäß können die bioziden monomeren BCM-Salze der Formel I durch Umsetzung von stöchiometrischen Mengen BCM und monomeren ethylenisch ungesättigten Säuren der Formel HA, worin A die Bedeutung wie $A^{\ominus}$ in Formel I hat, erhalten werden. Die Umsetzung kann in Substanz erfolgen. Sie wird aber vorzugsweise in wäßriger Lösung durchgeführt, wobei man die Säure der Formel HA in Wasser löst und das BCM in die wäßrige Lösung einträgt, wobei die Umsetzung unter leichtem Temperaturanstieg der Lösung erfolgt. Durch Abkühlen der wäßrigen Lösung bis nahe an den Gefrierpunkt des Wassers kristallisiert das entstandene BCM-Salz der Formel I aus und kann in reiner Form gewonnen werden.

Die erfindungsgemäß hergestellten BCM-Salze der Formel I sind im allgemeinen gut löslich, und zwar sowohl in Wasser als auch in üblichen radikalisch polymerisierbaren und/oder copolymerisierbaren ethylenisch ungesättigten Monomeren. Die BCM-Salze der Formel I können daher unmittelbar und problemlos zur Emulsions- und Suspensionspolymerisation bzw. -copolymerisation in wäßrigem Medium oder auch zur Lösungs- oder Substanzpolymerisation oder Copolymerisation in organischen Lösungsmitteln oder gelöst in entsprechenden Comonomerkomponenten eingesetzt werden. Die Polymerisation und Copolymerisation der BCM-Salze der Formel I ist vorzugsweise in Abwesenheit von überschüssigen freien anorganischen oder freien nicht copolymerisationsfähigen organischen Säuren durchzuführen, da sonst, insbesondere in wäßrigen Medien, die Gefahr eines Anionenaustauschs zwischen den BCM-Salzen der Formel I und den freien Säuren besteht, was zu Nachteilen führen kann.

Erfindungsgemäße biozide Polymerisate bzw. Copolymerisate mit erfindungsgemäßen Gehalten an Monomereinheiten aus BCM-Salzen der Formel I, deren Lösungen oder deren wäßrige Dispersionen können auch dadurch erhalten werden, daß man entsprechende Ausgangspolymerisate bzw.-copolymerisate, die Monomereinheiten der Formel HA, worin A die Bedeutung wie in Formel I hat, in ihrer sauren HA-Form enthalten, in wasserfreien polaren organischen Lösungsmitteln mit einer stöchiometrischen Menge pulverförmigem BCM oder löslichem BCM-Salz einer niedermolekularen schwachen Säure, vorzugsweise einer in ihrer freien Form destillierbaren schwachen organischen Säure, umsetzt, die gegebenenfalls frei gewordene schwache organische Säure eliminiert, vorzugsweise destillativ, und das erfindungsgemäße biozide Polymerisat bzw. Copolymerisat aus der organischen Lösung in üblicher Weise gewinnt oder, nach Emulgatorzusatz, in eine wäßrige Dispersion überführt und das polare Lösungsmittel gegebenenfalls anschließend entfernt, vorzugsweise destillativ. Als polare organische Lösungsmittel kommen z.B. inerte, niedermolekulare Alkohole, Ester, Äther und Ketone infrage, vorzugsweise Methanol, Propanol, Ethylacetat, Aceton, Methylethylketon, Dioxan, Tetrahydrofuran.

Einige charakteristische Eigenschaftsmerkmale von monomeren BCM-Salzen der Formel I, wie z. B. der Schmelzpunkt, die Löslichkeit in Wasser und die Löslichkeit in Butylacrylat sind in der Tabelle 1 zusammengefaßt wiedergegeben.

**Tabelle 1**

Eigenschaften von monomeren, polymerisationsfähigen BCM-Salzen der Formel I

| BCM-Salz der Formel I | Schmelzpunkt °C (Kapillarmethode) | Löslichkeit in $H_2O$ bei 25 °C | Löslichkeit in Butylacrylat bei 25 °C |
|---|---|---|---|
| $[BCM]\overset{\oplus}{H}$ $CH_2{=}CHCOO^{\ominus}$ | 195 (unter Zersetzung) | < 10 % | < 10 % |
| 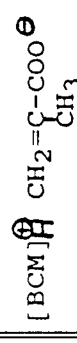 | 235 (unter Zersetzung) | < 5 % | < 10 % |
| 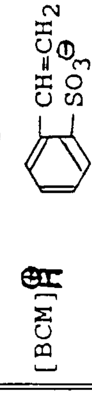 | beim Umkristallisieren polymerisiert | > 20 % | < 10 % |
| 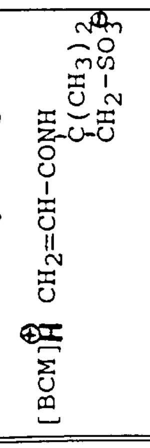 | 90 - 91 | > 20 % | < 10 % |
| 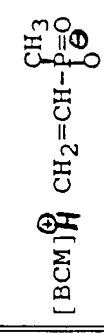 | - | > 20 % | < 10 % |

Zur Polymerisation können die BCM-Salze der Formel I sowohl in Substanz als auch in Form von Lösungen des BCM-Salzes in der wäßrigen Säure HA oder in der freien Säure HA eingesetzt werden. Bei der Herstellung von feinteiligen wäßrigen Reinacrylat- oder Styrol-Acrylat-Dispersionen, bei der die verwendeten Ausgangscomonomeren in vielen Fällen ethylenisch ungesättigte Säuren wie Acrylsäure (AS) oder Methacrylsäure (MAS) enthalten, löst man die zur Salzbildung stöchiometrisch benötigte BCM-Menge

vorteilhaft in der erforderlichen Menge der ethylenisch ungesättigten Säure unter Salzbildung und verwendet die Lösung des entstandenen monomeren BCM-Salzes in der ungesättigten Säure anstelle der reinen ungesättigten Säure. Verwendet man BCM-Salze der Formel I bei der Herstellung von kationischen (Beispiel 5) oder amphoteren Dispersionen (Beispiel 4), dann resultieren Dispersionen mit sehr guter fungizider Wirksamkeit und gleichzeitig besonders hoher algizider Wirksamkeit. Dabei kann die Stärke der Wirksamkeit gegen den einen oder anderen Mikroorganismus noch durch die Wahl der Art und Menge des zu verwendenden kationischen Tensids in weiten Grenzen variiert werden.

Gegenstand der Erfindung ist daher ferner die Verwendung von erfindungsgemäßen wäßrigen bioziden Kunststoffdispersionen auf der Basis von radikalisch polymerisierten oder copolymerisierten ethylenisch ungesättigten Monomeren mit biozid wirksamen Gehalten von Monomereinheiten der Formel I zum Imprägnieren und Grundieren von saugfähigen Substraten sowie zum Anstreichen oder Beschichten von festen Substraten, wobei die bioziden Kunststoffdispersionen anionische oder kationische oder amphotere Dispersionen sind, die biozid wirksame Dispersionspolymerisate bzw. - copolymerisate enthalten, deren Polymerisatpartikel mittlere Teilchendurchmesser von 0,02 bis 1 $\mu$m, vorzugsweise 0,05 bis 0,5 $\mu$m, aufweisen.

Erfindungsgemäß werden die Dispersionen bevorzugt zum Imprägnieren und Grundieren von saugfähigen Substraten, insbesondere von Putzflächen auf dem Bausektor, auch von geschliffenem Putz, und von Holz, Papier und Zellulose enthaltenden Produkten, sowie zum Anstreichen oder Beschichten beliebiger fester Substrate und auch als Textilausrüstungsmittel verwendet.

Der Feststoffgehalt der erfindungsgemäß zu verwendenden bioziden Dispersionen ist nicht kritisch. Vorzugsweise beträgt er jedoch 5 bis 70 Gew.-%, insbesondere 10 bis 60 Gew.-%, bezogen auf die Dispersion.

Eine weitere bevorzugte Ausführungsform der Erfindung besteht darin, daß die Dispersionen Dispersionscopolymerisate enthalten, deren Makromoleküle Monomereinheiten, berechnet in Gew.-%, bezogen auf das Copolymerisat, aus folgenden Monomergruppen enthalten:

a) 80 bis 99,9 Gew.-%, vorzugsweise 90 bis 99 Gew.-%, ethylenisch ungesättigte hydrophobe Monomere, vorzugsweise zugsweise aus der Gruppe Vinylester, Methacrylester, Acrylester, Vinylaromaten,

b) 0,001 bis 5 Gew.-%, vorzugsweise 0,02 bis 1 Gew.-%, BCM-Salze der Formel I, worin $A^{\ominus}$ die vorstehend angegebene Bedeutung hat,

c) 0 bis 10 Gew.-%, vorzugsweise 0,5 bis 5 Gew.-%, ethylenisch ungesättigte kationische wasserlösliche Monomere, die als kationische Gruppen quaternisierte Alkylammonium-, Alkylsulfonium-, Alkylphosphoniumgruppen, vorzugsweise Alkylammoniumgruppen, enthalten, deren Alkylreste jeweils 1 bis 24 C-Atome aufweisen, wobei einzelne oder mehrere der Alkylreste, vorzugsweise einzelne, durch ($C_5$-$C_7$)-Cycloalkyl-, ($C_7$-$C_{12}$)-Aralkyl-, ($C_1$-$C_{18}$)-Alkylreste, vorzugsweise Benzyl, Methyl, Äthyl oder $-CH_2CONH_2$ ersetzt sein können,

d) 0 bis 19 Gew.-%, vorzugsweise 0,1 bis 6 Gew.-%, ethylenisch ungesättigte hydrophile Monomere mit einer oder mehreren funktionellen Gruppen aus der Reihe -OH, -COOH, $-SO_3H$, -PO(OH), $-CONR^1R^2$, wobei $R^1$ und $R^2$, die gleich oder verschiedenen sein können, für H oder $-CH_2OR$ mit R = H oder ($C_1$-$C_8$)-Alkyl stehen und

die Dispersionen außerdem 0,1 bis 20 Gew.-%, vorzugsweise 0,1 bis 7 Gew.-%, oberflächenaktive Verbindungen aus der Gruppe der anionischen, nichtionischen, kationischen oder amphoteren Emulgatoren sowie ggf. außerdem zwischen 0 und 5 Gew.-%, vorzugsweise 0,1 bis 2 Gew.-%, Schutzkolloide enthalten, jeweils bezogen auf die Gesamtmonomerenmenge.

Die Herstellung erfindungsgemäßer, wäßriger anionischer, kationischer oder amphoterer Kunststoffdispersionen kann durch übliche Emulsionspolymerisation bzw. -copolymerisation, beispielsweise nach dem Zulauf- oder Voremulsionsverfahren bei 20 bis 100 °C, vorzugsweise bei 50 bis 90 °C, erfolgen. Man polymerisiert dabei, in üblicher Weise, bevorzugt einen Teil der Monomeren in der wäßrigen Flotte vor und dosiert die Restmenge unter Aufrechterhaltung der Polymerisationsreaktion kontinuierlich zu. Zur Erzielung eines besonders hohen Gehaltes an BCM-Kationen auf der Oberfläche der Dispersionspolymerisat- bzw. -copolymerisatpartikel kann man, vorzugsweise bei Copolymerisationen, z.B. die monomeren BCM-Salze der Formel I in ungleichmäßigen Mengen während des Polymerisationsverlaufs zudosieren, besonders vorteilhaft in größeren Mengen zusammen mit anderen Comonomeren am Anfang der Polymerisation. Der Feststoffgehalt der bei der Emulsionspolymerisation erhältlichen bioziden Kunststoffdispersionen liegt in dem bei der Herstellung von bekannten anionischen oder nichtionischen Anstrichbindemitteldispersionen üblichen Bereich.

Bei der Herstellung erfindungsgemäß zu verwendender Kunststoffdispersionen durch Emulsionscopolymerisation werden beispielsweise als Monomerkomponenten, wie sie der vorstehend unter a) aufgeführten Gruppe zugeordnet werden können, bevorzugt copolymerisationsfähige, ethylenisch ungesättigte hydrophobe Verbindungen eingesetzt, wie Vinylester von ($C_1$-$C_{18}$)-Carbonsäuren, vorzugsweise z.B. Vinylacetat, Vinylpropionat, Vinylversatat, Vinyllaurat, Vinylstearat; (Meth-)Acrylester von ($C_1$-$C_8$)-Alkoholen, vorzugsweise z.B. Methylmethacrylat, Butylmethacrylat, Oktylmethacrylat, Ethylacrylat, Isobutylacrylat, 2-Ethylhexylacrylat; Vinylaromaten, vorzugsweise z. B. Styrol, Vinyltoluol; Vinylchlorid, Ethylen, Acrylnitril, Diester von Maleinsäure und/oder Fumarsäure, Vinylpyrrolidon. Die Monomeren können sowohl einzeln als auch in Mischung verwendet werden. Vorzugsweise werden diejenigen Monomeren eingesetzt, die zu verseifungsbeständigen und stabilen Dispersionspolymerisaten bzw. -copolymerisaten führen. Üblicherweise richtet man sich bei der Auswahl der Monomeren bzw. deren Mischungsverhältnissen nach den gewünschten anwendungstechnischen Eigenschaften der Dispersion, wobei zu deren Einstellung die dem Fachmann bekannten üblichen Auswahlkriterien Geltung finden können.

Insbesondere sollte die minimale Filmbildungstemperatur (MFT) der Kunststoffdispersionen unterhalb des Bereichs oder höchstenfalls innerhalb des Bereichs der vorgesehenen Anwendungstemperaturen, d.h. vorzugsweise zwischen 0 und 80 °C, insbesondere zwischen 0 und 40 °C, liegen. Werden Polymerisate mit härterer Einstellung verwendet, so können zum Erreichen der erforderlichen MFT Filmbildungshilfsmittel oder äußere Weichmacher eingesetzt werden, wobei zuvor deren Einfluß auf die Biozideigenschaften der Dispersionen geprüft werden sollten. Sind solche Zusätze nicht erwünscht, so sollte die MFT der kationischen Dispersionen vorzugsweise im Bereich von 0 bis 25 °C liegen. Folgende Comonomerkombinationen eignen sich in Kombination mit monomeren BCM-Salzen der Formel I und kationischen Monomeren, ganz besonders z.B. in den nachstehend angegebenen Gewichtsverhältnissen (GT = Gewichtsteile), für die Herstellung erfindungsgemäßer wäßriger biozider kationischer Dispersionen:

| | |
|---|---|
| Butylacrylat/Methylmethacrylat | 10-90 GT / 90-10 GT |
| Butylacrylat/Styrol | 10-90 GT / 90-10 GT |
| Oktylacrylat/Methylmethacrylat | 5-80 GT / 95-20 GT |
| Oktylacrylat/Styrol | 5-80 GT / 95-20 GT |
| Vinylacetat/Butylacrylat | 40-80 GT / 60-20 GT |
| Vinylacetat/Vinylversatat | 50-80 GT / 50-20 GT |

Ausschlaggebend für die erfindungsgemäßen bioziden Eigenschaften der Dispersionen sind jedoch die Gehalte an Monomereinheiten von BCM-Salzen der Formel I.

Nicht minder wichtig ist im Falle einer erwünschten gleichzeitigen Steigerung und Optimierung der Algizideigenschaften der bioziden Dispersionen die Verwendung wasserlöslicher kationischer ethylenisch ungesättigter und copolymerisationsfähiger Monomerer mit quartären Alkylsulfonium-, Alkylphosphonium- oder insbesondere Alkylammoniumgruppen, wobei die Alkylreste jeweils 1 - 24 C-Atome aufweisen oder auch zu einer Ringstruktur vereint sein können, insbesondere aber ein ($C_5$-$C_7$)-Cycloalkyl-,($C_7$-$C_{12}$)-Aralkyl- oder ($C_1$-$C_{18}$)-Alkylrest sein können, wobei Methyl-, Äthyl-, Benzyl- oder $H_2N$-CO-$CH_2$-Reste bevorzugt sind. Die Konzentration dieser Monomeren sollte 0,1 bis 10 Gew.-%, vorzugsweise 0,5 bis 5 Gew.-%, bezogen auf die Gesamtmenge aller Monomeren, betragen.

Bevorzugte quaternisierte kationische Monomere sind z. B.
Trimethylammmoniumäthylacrylatchlorid,
Trimethylammoniumäthylmethacrylatchlorid,
$\beta$-Acetamido-diäthylaminoäthylacrylatchlorid,
$\beta$-Acetamido-diäthylaminoäthylmethacrylatchlorid,
Acrylamidopropyltrimethylammoniumchlorid,
Methacrylamidopropyltriemethylammoniumchlorid,
Acrylamidoäthyltrimethylammoniumchlorid,
Methacrylamidoäthyltrimethylammoniumchlorid,
Trimethylammoniumneopentylacrylatchlorid,
Trimethylammoniumneopentylmethacrylatchlorid,
Diallyl-dimethylammoniumchlorid,
Dially-butylmethyl-ammoniumchlorid.

Hinsichtlich des Eigenschaftsbildes der erfindungsgemäß zu verwendenden Polymerisatdispersionen kann es in manchen Fällen vorteilhaft sein, bei der Emulsionscopolymerisation noch weitere Comonomere zu verwenden, nämlich ethylenisch ungesättigte Verbindungen mit funktionellen Gruppen wie -OH, -COOH, -$SO_3$H, -PO(OH), -$NR^1R^2$, -$CONR^1R^2$, wobei $R^1$ und $R^2$ gleich oder verschieden sein können und für H oder -$CH_2$OR mit R = H oder ($C_1$-$C_8$)-Alkyl stehen.

Bevorzugte Verbindungen aus dieser Gruppe sind z. B. Hydroxyethylmethacrylat, Hydroxypropylmethacrylat, Polyhydroxypropylmethacrylat, Hydroxyethylacrylat, Hydroxypropylacrylat, Polyhydroxypropylacrylat, Methacrylsäure, Acrylsäure, Crotonsäure, Maleinsäure, Fumarsäure, Itakonsäure sowie die Halbester der letzteren drei Verbindungen, Acrylamidomethansulfonsäure, Dimethylaminoneopentylmethacrylat, Dimethylaminopropylmethacrylamid, Dimethylaminoethylmethacrylat, Dimethylaminoethylacrylat, 2-N-Morpholinoethylmethacrylat, t-Butylaminoethylmethacrylat, Methacrylamid, Acrylamid, N-Methylolmethacrylamid, N-Methylolacrylamid, Vinylsulfonsäure bzw. deren Salze, Acrylamidomethylpropansulfonsäure, Vinylphosphonsäure.

Bei der Verwendung von ethylenisch ungesättigten copolymerisationsfähigen Carbonsäuren soll deren Anteil vorzugsweise unterhalb von 10 Gew.-%, insbesondere zwischen 0,1 und 6 Gew.-%, bezogen auf die Gesamtmenge aller Monomeren, liegen.

Zur Einstellung der gewünschten Feinteiligkeit der Dispersionen (mittlerer Partikeldurchmesser 0,02 bis 1,0 µm, vorzugsweise 0,05 bis 0,5 µm, insbesondere 0,08 bis 0,15 µm) werden bei der Emulsionspolymerisation anionische oder kationische und/oder nichtionische und/oder amphotere tensioaktive Emulgatoren in einer Menge von 0,1 bis 20 Gew.-%, vorzugsweise 0,12 bis 7 Gew.-%, insbesondere 1 bis 5 Gew.-%, bezogen auf die gesamte Monomerenmenge, in üblicher Weise verwendet. Es hat sich gezeigt, daß die in den Dispersionen erfindungsgemäß benötigten optimalen Mengen dieser Emulgatoren die Wasserfestigkeit von Grundierungen und Imprägnierungen überraschenderweise nicht nachteilig beeinflussen.

Als Emulgatoren kommen bevorzugt übliche nichtionische Tenside, z. B. aus der Gruppe der Umsetzungsprodukte von Epoxiden, wie z. B. Ethylenoxid, mit aliphatischen, cycloaliphatischen, araliphatischen, aliphatisch-aromatischen, aromatischen Carbonsäuren, Alkoholen, Phenolen oder Aminen sowie Blockcopolymerisate aus verschiedenen Epoxiden, wie z. B. Ethylenoxid und Propylenoxid, zur Anwendung.

Ferner können übliche anionische Tenside, vorzugsweise z. B. tensioaktive Ammonium- sowie Alkalisalze von Fettsäuren (Seifen), Fettalkoholsulfaten, Isäthionsäureäthern von Fettalkoholen, Alkansulfonaten, Alkylbenzolsulfonaten, (oxethylierten) Sulfobernsteinsäureestern, polyoxethylierten Fettalkoholsulfaten, Alkylphenol- oder (Alkyl)Naphtholpolyoxethylatsulfaten und Fettalkoholphosphaten zur Anwendung gelangen.

Weitere bevorzugte Emulgatoren sind z. B. primäre, sekundäre und tertiäre Fettamine in Kombination mit organischen oder anorganischen Säuren sowie außerdem tensioaktive quaternäre Alkylammoniumverbindungen. Darüber hinaus können in manchen Fällen auch amphotere Tenside mit zwitterionischer Struktur, beispielsweise vom Betaintyp, vorteilhaft sein. Die genannten Emulgatoren können sowohl einzeln als auch in Kombination untereinander oder miteinander in üblicher Weise verwendet werden, soweit sie sich nicht aufgrund von entgegengesetzten Ladungen nachteilig beeinflussen bzw. die Stabilität der Dispersion verschlechtern.

Bei der Herstellung der kationischen Dispersionen können auch bekannte Schutzkolloide mitverwendet werden, und zwar bevorzugt solche auf der Basis von hochmolekularen organischen Verbindungen, die wasserlöslich oder wasserdispergierbar sind, dabei im wesentlichen keine oder keine ausgeprägte Grenzflächenaktivität entfalten und ein ausgeprägtes Dispergiervermögen besitzen. Bevorzugte Schutzkolloide sind z. B. Zelluloseäther, Polyvinylalkohole, Polysaccharide, Polyvinylpyrrolidone, wobei diese saure/anionische oder basische bzw. kationisch funktionelle Gruppen enthalten können. Die Auswahl richtet sich nach dem jeweiligen Dispersionstyp und darf nicht zur Störung der coulombschen Abstoßung der Latexteilchen führen, d. h. entgegengesetzt geladene Schutzkolloide lassen sich i. a. nicht gleichzeitig verwenden.

Die zu verwendenden Schutzkolloidmengen richten sich nach den gewünschten Dispersionseigenschaften, insbesondere der Feinteiligkeit der Dispersionspartikel. Bevorzugt werden bei der Emulsionspolymerisation gegebenenfalls Schutzkolloidmengen zwischen 0 und 5 Gew.-%, insbesondere zwischen 0,1 und 2 Gew.-%, bezogen auf die Gesamtmonomerenmenge, verwendet.

Zur Auslösung der Polymerisation bzw. Copolymerisation können alle in der Emulsionspolymerisation üblichen, vorzugsweise wasserlöslichen und Radikalketten initiierenden Systeme verwendet werden. Bevorzugte Initiatoren bei den anionischen Typen sind z. B. Persulfate wie Ammoniumpersulfat, Natriumpersulfat, Kaliumpersulfat; bei den rein kationisch geladenen Dispersionstypen finden dagegen eher Verbindungen wie 2,2'-Azobis-(2-amidinopropan)-dihydrochlorid, 2,2'-Azobis(N,N'-dimethylenisobutyramidin)-dihydrochlorid, 4,4'-Azobis-(4-cyanovaleriansäure), $H_2O_2$ oder t-Butylhydroperoxid Verwendung.

Allgemein einsetzbar sind z. B. auch Redox-Systeme wie $H_2O_2$ und Ascorbinsäure, Peroxide und mehrwertige Metallsalze, t-Butylhydroperoxid und Rongalit, wobei Redox-Systeme vor allem zur Senkung des Restmonomerengehaltes in der Nachreaktionsphase der Polymerisation vorteilhaft sein können, ferner energiereiche Strahlung sowie übliche Photoinitiatoren.

Zur Molekulargewichtssteuerung können bei der Emulsionspolymerisation auch übliche Regler, wie z. B. Merkaptane oder Halogenkohlenwasserstoffe zur Molekulargewichtserniedrigung, oder aber, gegebenenfalls bis zu 5 Gew.-%, bezogen auf die Gesamtmonomerenmenge, mehrfach ethylenisch ungesättigte oder

mehrfachfunktionelle und zur Vernetzung befähigte Verbindungen, wie z. B. Divinylbenzol, Ethylenglykoldimethacrylat, Ethylenglykoldiacrylat, Butandioldimethacrylat, Butandioldiacrylat, Triallylcyanurat, Melamin, Isocyanatoethylmethacrylat zur Molekulargewichtserhöhung verwendet werden.

Für die erfindungsgemäße Anwendung wäßriger bzw. feinteiliger Kunststoffdispersionen als Grundierungs- und Imprägniermittel kann deren Feststoffgehalt vorzugsweise auf Werte von 3 bis 40 Gew.-%, insbesondere 5 bis 20 Gew.-%, eingestellt werden. In diesen bevorzugten Feststoffkonzentrationsbereichen besitzen die Dispersionen eine niedrige Viskosität und ein hohes Eindringvermögen in saugfähige Substrate; die erfindungsgemäßen kationischen Dispersionen haben darüber hinaus überraschenderweise noch den Vorteil, praktisch keinen störenden Schaum zu entwickeln und sich daher besonders vorteilhaft verarbeiten zu lassen.

Die Erfindung wird durch die nachfolgenden Beispiele näher erläutert.

**Beispiel 1**

In einem 2 l-Dreihalskolben mit Rührer, Tropftrichter und Rückflußkühler werden 206,9 g entsalztes Wasser (E-Wasser) und 1,9 g Natrium-Laurylpolyglykoläthersulfat (Emulgator) vorgelegt. Es wird aus 182,1 g Methylmethacrylat, 183,1 g Butylacrylat, 11,25 g Acrylsäure, die zusätzlich 1,1 g Benzimidazolylcarbaminsäuremethylester (BCM) unter Salzbildung gelöst enthalten, 0,95 g Ammoniumpersulfat (APS), 3,75 g Natrium-Laurylpolyglykoläthersulfat und 243,75 g E-Wasser eine Emulsion hergestellt, von der 15 g der vorgelegten wäßrigen Emulgatorlösung zugesetzt werden. Unter Rühren wird die Vorlage auf 80 °C erwärmt, wobei ihr bereits bei 55 bis 60 °C 0,175 g APS zum Starten der Polymerisation zugesetzt werden. Die restliche Monomeremulsion wird innerhalb von 3,5 Stunden unter Rühren bei 80 °C in die Vorlage dosiert. Nach einer Nachreaktionsphase von 2,5 Stunden wird das Reaktionsgemisch auf Raumtemperatur (RT) abgekühlt. Dabei werden dem Reaktionsgemisch eine Stunde nach dem Ende der Monomeremulsionszudosierung 15 ml 17 gew.-%iger Ammoniak und nach erfolgter Abkühlung auf RT soviel weiterer 17 gew.-%iger Ammoniak zugesetzt, daß die resultierende Dispersion einen pH-Wert von 8,5 aufweist.
Man erhält eine anionische Dispersion mit einem Feststoffgehalt (FS-Gehalt) von 44,7 Gew.-%, bezogen auf die Dispersion, und einer minimalen Filmbildungstemperatur (MFT) von 7 °C. Der BCM-Gehalt des Copolymerisats beträgt 0,28 Gew.-%, bezogen auf das Copolymerisat.

**Beispiel 2**

In einem Rührreaktor, wie in Beispiel 1 beschrieben, werden 420 g E-Wasser sowie 11,8 g Natrium-Laurylsulfat und 4,8 g oxäthyliertes Nonylphenol (Emulgatorkombination) vorgelegt.
Es wird aus 663,1 g E-Wasser, 25,5 g Natrium-Laurylsulfat, 6,8 g oxäthyliertem Nonylphenol, 236,7 g Styrol, 289,3 g Butylacrylat, 7,1 g Acrylsäure, 13,1 g Methacrylsäure und 1,45 g BCM-Methacrylat, das zuvor separat hergestellt wurde, eine Emulsion hergestellt, von der 110 g der vorgelegten wäßrigen Emulgatorlösung zugesetzt werden. Unter Rühren wird die Vorlage auf 80 °C erwärmt, wobei ihr bei 60 °C 10 ml einer Initiator-Lösung aus 2 g Ammoniumpersulfat und 40 g E-Wasser zugesetzt werden. Nach 15 Minuten Vorpolymerisation dosiert man die restliche Monomeremulsion innerhalb von 3 Stunden sowie die restliche Initiatorlösung parallel zu. Nach weiterem 2-stündigem Nachheizen auf 80 °C wird das Reaktionsgemisch auf RT abgekühlt.
Man erhält eine feinteilige, koagulatfreie anionische Dispersion mit einem FS-Gehalt von 34,1 Gew.-%, einem pH-Wert von 3,4 und einer MFT von 12 °C. Der BCM-Gehalt des Copolymerisats beträgt 0,24 Gew.-%, bezogen auf das Copolymerisat.

**Beispiel 3**

Beispiel 1 wird wiederholt mit der Abänderung, daß man anstelle von 182,1 g Methylmethacrylat und 183,1 g Butylacrylat eine Mischung aus 258,9 g Butylacrylat , 93,7 g Methylmethacrylat und 93,7 g Styrol einsetzt und die 11,25 g Acrylsäure sowie die 1,1 g BCM durch eine Mischung aus 5,3 g BCM-AMPS-Salz (BCM-Acrylamidomethylpropansulfonat), 2,5 g Acrylsäure und 5,1 g Methacrylsäure ersetzt. Nach dem Ende der Polymerisation und Abkühlen des Reaktionsgemisches auf RT erhält man eine fein- bis mitteldisperse, koagulatfreie anionische Dispersion mit einem Feststoffgehalt von 49,8 Gew.-%, einem pH-Wert von 4,1 und einer MFT von 11 °C. Der BCM-Gehalt des Copolymerisats beträgt 0,56 Gew.-%, bezogen auf das Copolymerisat.

**Beispiel 4**

In einem Rührreaktor, wie in Beispiel 1 beschrieben, werden 1117,5 g E-Wasser, 4,5 g oxäthylierter Tridecylalkohol, 4,5 g Dimethyldidecylammoniumchlorid, 9 g Stearyldimethylbenzylammoniumchlorid sowie 18 g einer 50 gew.-%igen wäßrigen Methacrylamidopropyltrimethylammoniumchloridlösung vorgelegt. Nach Zugabe von 45 g einer Monomermischung aus 229,5 g Butylacrylat, 220,5 g Methylmethacrylat, 3,25 g BCM-Methacrylat, 1,5 g Methacrylsäure, 2,23 g BCM-Acrylat und 0,76 g Acrylsäure heizt man die Vorlage auf 80 °C auf, gibt 0,9 g 4,4'Azobiscyanovaleriansäure (AVS) zu und polymerisiert 15 Minuten lang vor. Anschließend gibt man nochmals 0,9 g AVS zu und tropft das restliche Monomerengemisch innerhalb von 2 Stunden bei 80 °C unter Rühren zu. Nach weiterer Zugabe von 0,45 g AVS wird eine Stunde bei 80 °C nachgeheizt und auf RT abgekühlt. Die resultierende feinteilige amphotere Dispersion besitzt einen FS-Gehalt von 30,3 Gew.-%, einen pH-Wert von 2,6, eine MFT von 6 °C und ist koagulatfrei. Der BCM-Gehalt des Copolymerisats beträgt 0,21 Gew.-%, bezogen auf das Copolymerisat.

**Beispiel 5**

In einem Rührreaktor, wie in Beispiel 1 beschrieben, werden 1186,2 g E-Wasser, 19,5 g 50 gew.-%ige wäßrige Methacrylamidopropyltrimethylammoniumchloridlösung, 19,5 g Laurylpyridiniumchlorid und 48 g einer Monomerenmischung aus 258,4 g Butylacrylat, 229,1 g Methylmethacrylat, 9,8 g Hydroxyäthylmethacrylat sowie 7,3 g BCM-AMPS-Salz (s. Beispiel 3) vorgelegt und auf 80 °C erwärmt. Nach Zugabe von 1,95 g AVS und 15 Minuten Vorpolymerisation wird die restliche Monomerenmischung innerhalb von 2 Stunden zudosiert. Anschließend kommen weitere 0,48 g AVS, die in 10 g E-Wasser bei pH 7 unter Mitverwendung von wäßrigem NaOH gelöst wurden, hinzu und das Reaktionsgemisch wird 30 Minuten bei 80 °C gerührt. Nach dem Abkühlen auf RT erhält man eine feinteilige kationische Dispersion, die frei von Koagulat ist, einen FS-Gehalt von 30 Gew.-%, einen pH-Wert von 3,5 und eine MFT von < 0 °C besitzt. Der BCM-Gehalt des Copolymerisats beträgt 0,65 Gew.-%, bezogen auf das Copolymerisat.

**Vergleichsbeispiel 1**

Beispiel 1 wird wiederholt mit der Abänderung, daß die 1,1 g BCM weggelassen werden. Man erhält eine feinteilige anionische Dispersion mit einem Feststoffgehalt von 44,8 Gew.-% und einer MFT von 7 °C.

**Vergleichsbeispiel 2**

Beispiel 2 wird wiederholt mit der Abänderung, daß man die 1,45 g BCM-Methacrylat wegläßt. Die Dispersion wird nach dem Abkühlen mit etwa 20 ml 17 gew-%igem wäßrigem $NH_3$ auf pH 8 bis 8,5 eingestellt. Die feinteilige anionische Dispersion hat einen Feststoffgehalt von 34 Gew.-% und eine MFT von 11 °C.

**Anwendungsprüfungen**

Eine Beurteilung der erfindungsgemäßen Dispersionen auf ihre biozide Wirksamkeit kann in der Weise erfolgen, daß man Prüfkörper aus Holz (Brettchentest) bzw. aus Filterpapier (Algen-Filtertest) mit jeweils einer der erfindungsgemäßen Dispersionen der Beispiele 1 bis 5 und als Vergleich mit nicht erfindungsgemäßen Dispersionen der Vergleichsbeispiele 1 und 2 mit vergleichbaren Feststoffmengen anstreicht und entweder auf einen mikrobiell infizierten Agar-Agar-Nährboden oder in eine Grünalgenkultur legt und die biozide Wirksamkeit gegen Pilze und Algen beobachtet. Im einzelnen kann dabei wie nachstehend beschrieben verfahren werden.

**Brettchentest**

Mit dem Brettchentest wird geprüft, ob ein Holzanstrich hinreichenden Schutz gegen Pilzbewuchs bietet. Dazu werden Kiefernsplintholzbrettchen der Abmessung 50 x 25 x 5 mm (Faserrichtung 50 mm) mit der zu prüfenden bioziden Dispersion oder Lösung entweder einseitig bestrichen oder entsprechend einer für Holzschutzmittel gegebenen anderen Applikationsform (z.B. Kurztauchen) behandelt. Nach vierwöchiger Trocknung an der Luft bei RT werden die angestrichenen oder tauchbehandelten Brettchen-Prüfkörper nach Sterilisation durch UV-Licht mit einer behandelten Prüfkörperfläche auf infizierte und vorbebrütete Nährböden gelegt, die mit Schimmelpilzen (Aspergillus Niger) oder Bläuepilzen (Sclerophoma pityophila u.

Aureobasidium pullulans) oder Moderpilzen (Chaetomium globosom) beimpft worden sind.

Die über die vorbebrüteten Nährböden mit Pilzen beimpften Brettchen-Prüfkörper werden im Brutschrank bei 29 °C und 70 % rel. Luftfeuchte 4 Wochen gelagert und das Pilzwachstum auf dem Prüfkörper anschließend nach folgender Bewertungsskala 0 bis 4 beurteilt.

| | |
|---|---|
| OH > 3 | = Holz nicht bewachsen und Hemmzone auf dem Agar-Nährboden neben dem Prüfkörper über 3 mm breit |
| OH < 3 | = Holz nicht bewachsen und Hemmzone auf dem Agar-Nährboden neben dem Prüfkörper unter 3 mm breit |
| 0 | = Holz nicht bewachsen, keine Hemmzone nebem dem Prüfkörper auf dem Agar-Nährboden |
| 1 | = Holz gering bewachsen, unter 10 % |
| 2 | = Holz bewachsen, unter 30 % |
| 3 | = Holz deutlich bewachsen, 30 bis 60 %, Holz angegriffen |
| 4 | = Holz stark bewachsen, über 60 %, Holz im ganzen angegriffen. |

Zur Beurteilung der Wasserfestigkeit bzw. Auslaugbarkeit des bioziden Wirkstoffs werden in einem weiteren Test die oben beschriebenen grundierten bzw. angestrichenen bzw. tauchbehandelten und getrockneten Prüfkörper jeweils 48 Stunden, 96 Stunden sowie 1 Monat in fließendem Wasser gewässert, anschließend erneut getrocknet, mittels UV-Licht keimfrei gemacht und in Petrischalen auf die vorbereiteten und jeweils spezifisch infizierten Agar-Agar-Nährböden aufgelegt. Die Bebrütung und anschließende Beurteilung der Proben in den Petrischalen erfolgt in analoger Weise wie vorstehend bei den nicht gewässerten Proben beschrieben.

**Algen-Filtertest**

Geprüft wird der Schutz gegen Algenbefall. Dazu werden Anstriche mit Algen infiziert und unter standardisierten Wuchsbedingungen aufgestellt. Bei einer guten algiziden Wirkung dürfen die Algen nicht auf dem Anstrich wachsen.

Um die Auslaugbarkeit des Algizids zu testen, werden die Anstriche vor der Algeninfektion zwei Tage, vier Tage und 1 Monat gewässert. Die Wirksamkeit sollte dadurch nicht wesentlich vermindert werden.

Versuchsdurchführung

Papierrundfilter mit einem Durchmesser von 5,5 cm werden ein- oder zweiseitig mit der zu prüfenden Dispersion bestrichen und bei Zimmertemperatur 2 bis 3 Tage getrocknet. Durch Wiegen vor und nach dem Anstrich wird das Gewicht des Trockenfilms bestimmt. Nach der Trocknung werden einzelne Filter jeweils 48 bzw. 96 Stunden sowie 1 Monat in fließendes Wasser gegeben und anschließend erneut getrocknet.

Vor der Algeninfektion werden die trockenen Filter beidseitig unter UV-Licht sterilisiert und einzeln in sterile Glaspetrischalen von 9 cm Ø gelegt. Hierauf erfolgt die Infektion mit 10 ml Grünalgenkultur (verwendeter Stamm: Chlorella Pyrenoidosa), die in einer Nährlösung nach Knop gezüchtet wurde und 8 bis 21 Tage alt ist. Der Versuch wird in einem Raum mit diffusem Licht bei 16 bis 20 °C durchgeführt. Um ein schnelleres Wachstum der Grünalgen zu fördern, wird nachts belichtet. Nach 14 Tagen werden die Anstriche nach folgender Bewertungsskala 0 bis III beurteilt:

| | |
|---|---|
| 0 | = Anstrich nicht bewachsen |
| I | = Anstrich gering bewachsen |
| II | = Anstrich deutlich bewachsen |
| III | = Anstrich stark bewachsen. |

Die Ergebnisse sind in der Tabelle 2 zusammengefaßt wiedergegeben. Sie zeigen die hervorragende Hemmwirkung erfindungsgemäßer biozider Anstriche aus den Beispielen 1 bis 5 sowohl im Pilzhemmtest als auch im Algenhemmtest, jeweils auch nach vorausgegangener Wässerung des Anstriches bis zu 1 Monat, vergleichsweise zu nicht erfindungsgemäßen Anstrichen aus den BCM-freien Kunststoffdispersionen der Vergleichsbeispiele 1 und 2 und der handelsüblichen bioziden Holzschutzlasur Sadolin classic der Fa. Sadolin GmbH. Es ist dabei insbesondere bemerkenswert, daß die erfindungsgemäß konservierten Proben durch Wässerung ihre pilzhemmende Wirkung praktisch nicht einbüßen, die amphotere Dispersion des Beispiels 4 und die kationische Dispersion des Beispiels 5 darüber hinaus sich durch eine ausgesprochen starke Algizidwirkung auszeichnen und die erfindungsgemäßen Proben außerdem, vergleichsweise zu Proben, die mit üblichen Dispersionen gemäß den Vergleichsbeispielen 1 und 2 oder mit Sadolin classic angestrichen worden sind, wie schon erwähnt per se insgesamt ein unerwartet gutes Hemmverhalten zeigen.

**Tabelle 2** **Prüfung der biologischen Hemmwirkung von Anstrichen aus bioziden Kunststoffdispersionen auf Holzprüfkörpern und Filterpapier** [H = Holzprüfkörper; F = Filterpapierprüfkörper; o.W. = Prüfung ohne vorausgegangene Prüfkörperwässerung; h-W. = vorausgegangene Prüfkörperwässerungsdauer in Stunden bzw. M-W. in Monaten· Pilztestdauer = 4 Wochen, Bewertungsskala 0 (kein Pilzbefall) bis 4 (starker Pilzbefall).
Algentestdauer = 14 Tage, Bewertungsskala O (kein Algenbewuchs) bis III (starker Algenbewuchs)]

| Prüfkörperanstrich aus Kunststoffdispersion von | Biologische Prüforganismen und Testergebnisbewertungszahlen | | | | | | | | | | | | | | | |
|---|---|---|---|---|---|---|---|---|---|---|---|---|---|---|---|---|
| | Bläuepilze | | | | Schimmelpilze | | | | Moderpilze | | | | Algen | | | |
| | o.W. | 48h-W. | 96h-W. | 1M-W. | o.W. | 48h-W. | 96h-W. | 1M-W. | o.W. | 48h-W. | 96h-W. | 1M-W. | o.W. | 48h-W. | 96h-W. | 1M-W. |
| Beispiel 1(H) | OH>3 | OH>3 | OH>3 | 0 | 0 | 0 | 0 | 0 | OH>3 | OH>3 | OH>3 | OH>3 | | | | |
| Beispiel 1(F) | | | | | | | | | | | | | 0 | 0 | I | II |
| Beispiel 2(H | 0 | 0 | 0 | 0 | 0 | 1 | 1 | 2 | 0 | 0 | 1 | 2 | | | | |
| Beispiel 2(F) | | | | | | | | | | | | | 0 | I | II | III |
| Beispiel 3(H) | OH>3 | OH>3 | OH>3 | OH>3 | OH>3 | 0 | OH>3 | 0 | 0 | 0 | 0 | 0 | | | | |
| Beispiel 3(F) | | | | | | | | | | | | | 0 | 0 | II | II |
| Beispiel 4(H) | 0 | 0 | 0 | 1 | 0 | 0 | 2 | 1 | 0 | 0 | 1 | 1 | | | | |
| Beispiel 4(F) | | | | | | | | | | | | | 0 | 0 | 0 | 0 |
| Beispiel 5(H) | OH>3 | OH>3 | OH>3 | OH>3 | OH>3 | OH>3 | OH>3 | OH>3 | OH>3 | 0 | OH>3 | 0 | | | | |
| Beispiel 5(F) | | | | | | | | | | | | | 0 | 0 | 0 | 0 |
| Verglbsp.1(H) | 4 | 4 | 4 | 4 | 4 | 4 | 4 | 4 | 4 | 4 | 4 | 4 | | | | |
| Verglbsp.1(F) | | | | | | | | | | | | | I | II | III | III |
| Verglbsp.2(H) | 4 | 4 | 4 | 4 | 4 | 4 | 4 | 4 | 4 | 4 | 4 | 4 | | | | |
| Verglbsp.2(F) | | | | | | | | | | | | | I | II | II | III |
| Handelsübl. Holzschutzlasur (Sadolin classic) | 0 | 0 | 1 | 3 | 4 | 4 | 4 | 4 | 1 | 3 | 4 | 4 | | | | |

## Patentansprüche

1. Biozide Polymerisate oder Copolymerisate auf der Basis von radikalisch polymerisierten oder copolymerisierten ethylenisch ungesättigten Monomeren, dadurch gekennzeichnet, daß die Polymerisate bzw.

Copolymerisate Monomereinheiten aus BCM-Salzen der Formel I,

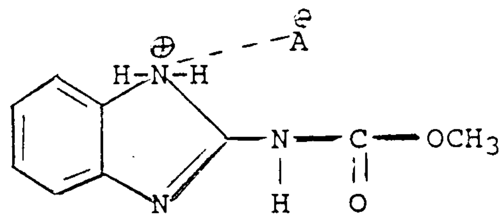

(I)

worin $A^{\ominus}$ einen anionischen ethylenisch ungesättigten Carbonsäure- oder Sulfonsäure- oder Phosphonsäurerest bedeutet, enthalten und diese Monomereinheiten über die ethylnische Doppelbindung des Restes $A^{\ominus}$ in die bioziden Makromoleküle einpolymerisiert sind, oder Lösungen oder wäßrige Dispersionen dieser Polymerisate bzw. Copolymerisate, vorzugsweise wäßrige Dispersionen.

**2.** Biozide Copolymerisate nach Anspruch 1, dadurch gekennzeichnet, daß sie 0,001 bis 5 Gew.-%, vorzugsweise 0,02 bis 1 Gew.-%, bezogen auf das biozide Copolymerisat, Monomereinheiten aus BCM-Salzen der Formel I enthalten.

**3.** Biozide Polymerisate oder Copolymerisate nach Anspruch 1 oder 2, dadurch gekennzeichnet, daß sie Monomereinheiten aus BCM-Salzen der Formel I enthalten, bei denen in Formel I der anionische Rest $A^{\ominus}$ einen Acrylat-, Methacrylat-, Fumarat-, Maleinat-, Crotonat-, Itakonat-, Styrolsulfonat-, Acrylamidomethylpropansulfonat-, Acrylamidoglykolsäuremethyläther-, Vinylsulfonat-, Vinylphosphonat- oder Acrylamidomethylphosphonat-Rest bedeutet.

**4.** Biozide wäßrige Copolymerisatdispersionen nach einem oder mehreren der Ansprüche 1 bis 3, dadurch gekennzeichnet, daß die Dispersionen Dispersionscopolymerisate enthalten, deren Makromoleküle Monomereinheiten, berechnet in Gew.-%, bezogen auf das Copolymerisat, aus folgenden Monomergruppen enthalten:

a) 80 bis 99,9 Gew.-%, vorzugsweise 90 bis 99 Gew.-%, ethylenisch ungesättigte hydrophobe Monomere, vorzugsweise aus der Gruppe Vinylester, Methacrylester, Acrylester, Vinylaromaten,

b) 0,001 bis 5 Gew.-%, vorzugsweise 0,02 bis 1 Gew.-%, BCM-Salze der Formel I, worin $A^{\ominus}$ die in den Ansprüchen 1 bis 3 angegebene Bedeutung hat,

c) 0 bis 10 Gew.-%, vorzugsweise 0,5 bis 5 Gew.-%, ethylenisch ungesättigte kationische wasserlösliche Monomere, die als kationische Gruppen quaternisierte Alkylammonium-, Alkylsulfonium-, Alkylphosphoniumgruppen, vorzugsweise Alkylammoniumgruppen, enthalten, deren Alkylreste jeweils 1 bis 24 C-Atome aufweisen, wobei einzelne oder mehrere der Alkylreste, vorzugsweise einzelne, durch ($C_5$-$C_7$)-Cycloalkyl-, ($C_7$-$C_{12}$)-Aralkyl-, ($C_1$-$C_{18}$)-Alkylreste, vorzugsweise Benzyl, Methyl, Äthyl oder $-CH_2CONH_2$ ersetzt sein können,

d) 0 bis 19 Gew.-%, vorzugsweise 0,1 bis 6 Gew.-%, ethylenisch ungesättigte hydrophile Monomere mit einer oder mehreren funktionellen Gruppen aus der Reihe -OH, -COOH, $-SO_3H$, -PO(OH), $-CONR^1R^2$, wobei $R^1$ und $R^2$, die gleich oder verschiedenen sein können, für H oder $-CH_2OR$ mit R = H oder ($C_1$-$C_8$)-Alkyl stehen und

die Dispersionen außerdem 0,1 bis 20 Gew.-%, vorzugsweise 0,1 bis 7 Gew.-%, oberflächenaktive Verbindungen aus der Gruppe der anionischen, nichtionischen, kationischen oder amphoteren Emulgatoren sowie ggf. außerdem zwischen 0 und 5 Gew.-%, vorzugsweise 0,1 bis 2 Gew.-%, Schutzkolloide enthalten, jeweils bezogen auf die Gesamtmonomerenmenge.

5. Biozide monomere BCM-Salze der Formel I,

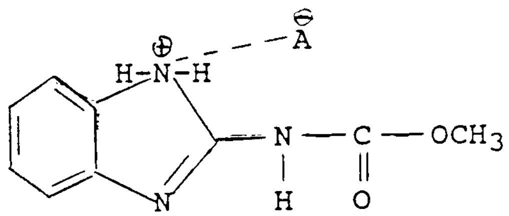

(I)

worin $A^{\ominus}$ einen anionischen ethylenisch ungesättigten und radikalisch polymerisationsfähigen und copolymerisationsfähigen Carbonsäure- oder Sulfonsäure- oder Phosphonsäurerest, vorzugsweise einen Acrylat-, Methacrylat-, Fumarat-, Maleinat-, Crotonat-, Itakonat-, Styrolsulfonat-, Acrylamidomethylpropansulfonat-, Acrylamidoglykolsäuremethyläther-, Vinylsulfonat-, Vinylphosphonat- oder Acrylamidomethylphosphonat-Rest bedeutet.

6. Verwendung der bioziden monomeren BCM-Salze der Formel I nach Anspruch 5 zur Herstellung von bioziden Polymerisaten oder Copolymerisaten nach einem oder mehreren der Ansprüche 1 bis 4 durch radikalische Polymerisation oder Copolymerisation, sowie von Lösungen oder wäßrigen Dispersionen dieser Polymerisate bzw. Copolymerisate.

7. Biozide Polymerisate oder Copolymerisate nach einem oder mehreren der Ansprüche 1 bis 4, dadurch gekennzeichnet, daß sie in Form von wäßrigen anionischen oder kationischen oder amphoteren Dispersionen vorliegen, deren Feststoffgehalt 5 bis 70 Gew.-%, vorzugsweise 10 bis 60 Gew.-%, bezogen auf die Dispersion, beträgt und deren minimale Filmbildungstemperatur (MFT) im Bereich von 0 bis 80 °C, vorzugsweise 0 bis 40 °C, liegt.

8. Verfahren zur Herstellung von bioziden Polymerisaten oder Copolymerisaten, vorzugsweise in Form ihrer wäßrigen Dispersionen, nach einem oder mehreren der Ansprüche 1 bis 4 und 7 durch radikalisch initiierte Polymerisation oder Copolymerisation aus den sie aufbauenden monomeren bioziden BCM-Salzen der Formel I nach Anspruch 1 sowie den sie gegebenenfalls nach Ansprüchen 1 bis 4 und 7 außerdem aufbauenden ethylenisch ungesättigten und copolymerisationsfähigen Comonomeren durch Emulsions-, Suspensions-, Lösungs- oder Substanzpolymerisation oder -copolymerisation, vorzugsweise durch Emulsionspolymerisation oder -copolymerisation, sowie gegebenenfalls Isolierung der bioziden Polymerisate oder Copolymerisate aus deren Lösungen oder wäßrigen Dispersionen.

9. Verwendung der bioziden Polymerisate oder Copolymerisate nach einem oder mehreren der Ansprüche 1 bis 4 und 7 oder hergestellt nach Anspruch 8, als biozide Beschichtungsmassen oder Imprägniermassen, vorzugsweise zur Herstellung von fungiziden und algiziden Anstrich- und Ausrüstungsmitteln, von Lasuren für den Holzschutz, von Dispersionsanstrichmitteln mit Bläueschutz auf Holz, von Kunstharzputzen, von Sichtbetonanstrichmitteln und von Textilausrüstungsmitteln, insbesondere in Form von wäßrigen Dispersionen.

10. Verfahren zur bioziden Ausrüstung, Imprägnierung und/oder Behandlung von festen Substraten, vorzugsweise von Holz, Sichtbeton, Textilien und Papier gegen den Befall von Pilzen und Algen, dadurch gekennzeichnet, daß man die Substrate durch Anstreichen, Tauchen oder Besprühen mit bioziden wäßrigen Polymerisat- oder Copolymerisatdispersionen nach Ansprüchen 1 bis 4 und 7 oder hergestellt nach Anspruch 8 behandelt und anschließend trocknet.

## Claims

1. Biocidal polymer or copolymers based on free radical-polymerized or copolymerized ethylenically unsaturated monomers, wherein the polymers or copolymers contain monomer units composed of BCM salts of the formula I

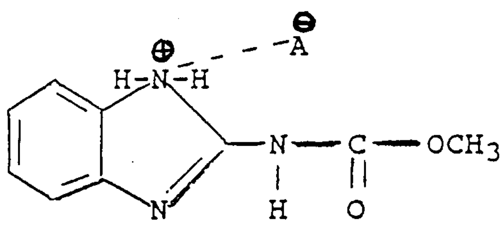

(I)

in which $A^{\ominus}$ is an anionic ethylenically unsaturated carboxylic acid or sulfonic acid or phosphonic acid radical, and said monomer units are polymerized in the biocidal macromolecule via the ethylenic double bond of the radical $A^{\ominus}$, or solutionsor agueous dispersions of said polymers or copolymers, preferably aqueous dispersions.

**2.** Biocidal copolymers as claimed in claim 1, which contain 0.001 to 5 % by weight, preferably 0.02 to 1 % by weight, with respect to the biocidal copolymer, of monomer units composed of BCM salts of the formula I.

**3.** Biocidal polymers or copolymers as claimed in claim 1 or 2, which contain monomer units comprising BCM salts of the formula I, in which, in formula I, the anionic radical $A^{\ominus}$ is an acrylate, methacrylate, fumarate, maleate, crotonate, itaconate, styrenesulfonate, acrylamidomethylpropanesulfonate, acrylamidoglycolic acid methyl ether, vinylsulfonate, vinylphosphonate or acrylamidomethylphosphonate radical.

**4.** Biocidal aqueous copolymer dispersion as claimed in one or more of claims 1 to 3, wherein the dispersions contain dispersion copolymers in which the macromolecules contain monomer units, calculated in % by weight with respect to the copolymer, from the following monomer groups:

a) 80 to 99.9 % by weight, preferably 90 to 99 % by weight, of ethylenically unsaturated hydrophobic monomers, preferably from the group comprising vinyl esters, methacrylic esters, acrylic esters and vinyl-aromatic compounds,

b) 0.001 to 5 % by weight, preferably 0.02 to 1 % by weight,of BCM salts of the formula I, in which $A^{\ominus}$ has the meaning indicated in claims 1 to 3,

c) 0 to 10 % by weight, preferably 0.5 to 5 % by weight, of ethylenically unsaturated cationic water-soluble monomers, which contain, as cationic groups, quaternized alkylammonium, alkylsulfonium or alkylphosphonium groups, preferably alkylammonium groups, the alkyl radicals of which in each case have 1 to 24 carbon atoms, it being possible for individual alkyl radicals or several alkyl radicals, preferably individual alkyl radicals, to be replaced by $(C_5\text{-}C_7)$-cycloalkyl, $(C_7\text{-}C_{12})$-aralkyl or $(C_1\text{-}C_{18})$-alkyl radicals, preferably benzyl, methyl, ethyl or $-CH_2CONH_2$, and

d) 0 to 19 % by weight, preferably 0.1 to 6 % by weight, of ethylenically unsaturated hydrophilic monomers containing one or more functional groups from the series comprising -OH, -COOH, $-SO_3H$, -PO(OH) and $-CONR^1R^2$, in which $R^1$ and $R^2$, which can be identical or different, are H or $-CH_2OR$, where R = H or $(C_1\text{-}C_8)$-alkyl, and

the dispersions also contain 0.1 to 20 % by weight, preferably 0.1 to 7 % by weight, of surface-active compounds from the group comprising anionic, nonionic, cationic or amphoteric emulsifiers and also, optionally, in addition between 0 and 5 % by weight, preferably 0.1 to 2 % by weight, of protective colloids, in each case with respect to the total amount of monomer.

**5.** Biocidal monomeric BCM salts of the formula I

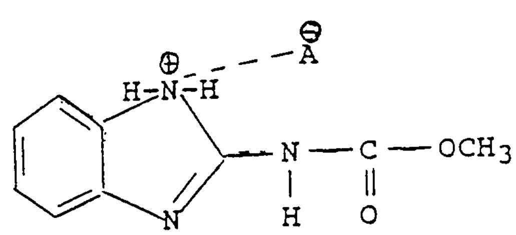

(I)

in which $A^{\ominus}$ is an anionic ethylenically unsaturated and free radical-polymerizable and copolymerizable carboxylic acid or sulfonic acid or phosphonic acid radical, preferably an acrylate, methacrylate, fumarate, maleate, crotonate, itaconate, styrenesulfonate, acrylamidomethylpropanesulfonate, acrylamidoglycolic acid methyl ether, vinylsulfonate, vinylphosphonate or acrylamidomethylphosphonate radical.

6. The use of the biocidal monomeric BCM salts of formula I as claimed in claim 5 for the preparation of biocidal polymers or copolymers as claimed in one or more of claims 1 to 4 by free radical polymerization or copolymerization, and also of solutions or aqueous dispersions of said polymers and copolymers.

7. Biocidal polymers or copolymers as claimed in one or more of claims 1 to 4, which are in the form of aqueous anionic or cationic or amphoteric dispersions, the solids content of which is 5 to 70 % by weight, preferably 10 to 60 % by weight, with respect to the dispersion, and the minimum film-forming temperature (MFT) of which is in the range from 0 to 80 °C, preferably 0 to 40 °C.

8. A process for the preparation of biocidal polymersor copolymers, preferably in the form of their aqueous dispersions, as claimed in one or more of claims 1 to 4 and 7 by free radical-initiated polymerization or copolymerization from the monomeric biocidal BCM salts of the formula I as claimed in claim 1, from which they are built up, as well as the ethylenically unsaturated and copolymerizable comonomers, from which they are optionally also built up as claimed in claims 1 to 4 and 7, by emulsion, suspension, solution or bulk polymerization or copolymerization, preferably by emulsion polymerization or copolymerization, and also, optionally, isolation of the biocidal polymers or copolymers from their solutions or aqueous dispersions.

9. The use of the biocidal polymers or copolymers as claimed in one or more of claims 1 to 4 and 7 or prepared as claimed in claim 8 as biocidal coating compositions or impregnating compositions, preferably for the preparation of fungicidal and algicidal paints and finishing agents, scumbles for wood protection, dispersion paints giving protection against blue staining on wood, synthetic resin renderings, exposed concrete paints and textile finishing agents, in particular in the form of aqueous dispersions.

10. A process for biocidal finishing, impregnation and/or treatment of solid substrates, preferably wood, exposed concrete, textiles and paper, against attack by fungi and algae, wherein the substrates are treated, by painting on, dipping or spraying, with biocidal aqueous polymer or copolymer dispersions as claimed in claims 1 to 4 and 7 or prepared as claimed in claim 8 and then dried.

**Revendications**

1. Polymères ou copolymères biocides, à base de monomères à insaturation éthylénique, polymérisés ou copolymérisés par polymérisation radicalaire, caractérisés en ce que les polymères ou copolymères contiennent des motifs monomères de sels de BCM de formule I :

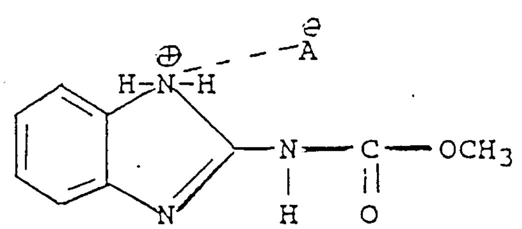

(I)

dans laquelle $A^-$ est un résidu anionique d'un acide carboxylique ou d'un acide sulfonique ou d'un acide phosphonique à insaturation éthylénique, et ces motifs monomères sont incorporés par polymérisation, par l'intermédiaire de la double liaison éthylénique du résidu $A^-$, dans les macromolécules biocides, ou encore solutions ou dispersions aqueuses de ces polymères ou copolymères, de préférence dispersions aqueuses.

**2.** Copolymères biocides selon la revendication 1, caractérisés en ce qu'ils contiennent de 0,001 à 5 % en poids, de préférence de 0,02 à 1 % en poids, par rapport au copolymère biocide, de motifs monomères de sels de BCM de formule I.

**3.** Polymères ou copolymères biocides selon la revendication 1 ou 2, caractérisés en ce qu'ils contiennent des motifs monomères de sels de BCM de formule I, où, dans la formule I, le résidu anionique $A^-$ est un radical acrylate, méthacrylate, fumarate, maléate, crotonate, itaconate, styrènesulfonate, acrylamidométhylpropanesulfonate, éther méthylique de l'acide acrylamidoglycolique, vinylsulfonate, vinylphosphonate ou acrylamidométhylphosphonate.

**4.** Dispersions aqueuses biocides de copolymères selon l'une ou plusieurs des revendications 1 à 3, caractérisées en ce que :

les dispersions contiennent des copolymères en dispersion, dont les macromolécules contiennent des motifs monomères, les quantités étant exprimées en % en poids par rapport au copolymère, à base des groupes de monomères suivants :

a) de 80 à 99,9 % en poids, de préférence de 90 à 99 % en poids, de monomères hydrophobes à insaturation éthylénique, choisis de préférence parmi l'ensemble comprenant les esters vinyliques, les esters méthacryliques, les esters acryliques et les composés vinylaromatiques,

b) de 0,001 à 5 % en poids et de préférence de 0,02 à 1 % en poids de sels de BCM de formule I, où $A^-$ a les significations données dans les revendications 1 à 3.

c) de 0 à 10 % en poids, de préférence de 0,5 à 5 % en poids de monomères cationiques solubles dans l'eau à insaturation éthylénique, qui contiennent comme groupes cationiques des groupes alkylammonium, alkylsulfonium, alkylphosphonium quaternisés, de préférence des groupes alkylammonium, dont les fragments alkyle ont chacun de 1 à 24 atomes de carbone, auquel cas on peut remplacer des radicaux alkyle individuels ou plusieurs d'entre eux, de préférence individuels, par des radicaux cycloalkyle en $C_5$ à $C_7$, aralkyle en $C_7$ à $C_{12}$, alkyle en $C_1$ à $C_{18}$, de préférence par des radicaux benzyle, méthyle, éthyle ou $-CH_2CONH_2$,

d) de 0 à 19 % en poids, de préférence de 0,1 à 6 % en poids de monomères hydrophiles à insaturation éthylénique ayant un ou plusieurs groupes fonctionnels choisis parmi l'ensemble comprenant -OH, -COOH, $-SO_3H$, -PO(OH), $-CONR^1R^2$, où $R^1$ et $R^2$, qui peuvent être identiques ou différents, représentent H ou $-CH_2OR$, où R est un hydrogène ou un radical alkyle en $C_1$ à $C_8$, et

les dispersions contiennent en outre, toujours par rapport à la quantité totale des monomères, de 0,1 à 20 % en poids et de préférence de 0,1 à 7 % en poids de composés tensioactifs choisis parmi l'ensemble comprenant les émulsifiants anioniques, non ioniques, cationiques ou amphotères, et éventuellement, en outre, de 0 à 5 % en poids et de préférence de 0,1 à 2 % en poids de colloïdes protecteurs.

**5.** Sels de BCM monomères biocides de formule I :

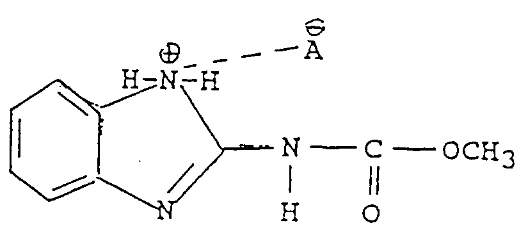

(I)

dans laquelle $A^-$ est un radical acide carboxylique ou acide sulfonique ou acide phosphonique anionique à insaturation éthylénique et pouvant subir une polymérisation et une copolymérisation radicalaires, de préférence un radical acrylate, méthacrylate, fumarate, maléate, crotonate, itaconate, styrènesulfonate, acrylamidométhylpropanesulfonate, éther méthylique de l'acide acrylamidoglycolique, vinylsulfonate, vinylphosphonate ou acrylamidométhylphosphonate.

**6.** Utilisation des sels de BCM monomères biocides de formule I selon la revendication 5 pour préparer des polymères ou copolymères biocides selon l'une ou plusieurs des revendications 1 à 4 par polymérisation ou copolymérisation radicalaire, ainsi que des solutions ou des dispersions aqueuses de ces polymères ou copolymères.

**7.** Polymères ou copolymères biocides selon l'une ou plusieurs des revendications 1 à 4, caractérisés en ce qu'ils présentent sous forme de dispersions aqueuses anioniques ou cationiques ou amphotères, dont la teneur en extrait sec est de 5 à 70 % en poids et de préférence de 10 à 60 % en poids par rapport à la dispersion, et dont la température minimale de formation du feuil (MFT) est comprise entre 0 et 80 ° C et de préférence entre 0 et 40 ° C.

**8.** Procédé pour préparer des polymères ou copolymères biocides, de préférence sous forme de leurs dispersions aqueuses, selon l'une ou plusieurs des revendications 1 à 4 et 7, par polymérisation ou copolymérisation, amorcée par des radicaux, à partir des sels de BCM biocides monomères de formule I selon la revendication 1 qui les constituent, ainsi que des comonomères à insaturation éthylénique et copolymérisable, qui par ailleurs les constituent éventuellement selon les revendications 1 à 4 et 7, par polymérisation ou copolymérisation en émulsion, ou suspension, en solution ou en l'état, de préférence par polymérisation ou copolymérisation en émulsion, et éventuellement isolement, de leurs solutions ou dispersions aqueuses, des polymères ou copolymères biocides.

**9.** Utilisation des polymères ou copolymères biocides selon l'une ou plusieurs des revendications 1 à 4 et 7, ou préparés selon la revendication 8, comme compositions de revêtement ou compositions d'imprégnation biocides, de préférence pour la préparation de peintures et d'apprêts fongicides et algicides, de lasures pour la protection du bois, de peintures en dispersion ayant un effet de protection du bois contre le bleuissement, d'enduits plastiques, de peintures pour béton apparent et de produits d'apprêts textiles, en particulier sous forme de dispersions aqueuses.

**10.** Procédés d'apprêt, imprégnation et/ou traitement biocides de substrats et subjectiles solides, de préférence le bois, le béton apparent, les textiles et le papier, contre une infestation par des champignons et des algues, caractérisés en ce qu'on traite les substrats et subjectiles par enduction, par immersion ou pulvérisation avec les dispersions aqueuses biocides de polymères ou copolymères selon les revendications 1 à 4 et 7, ou préparées selon la revendication 8, puis qu'on les sèche.